# EUROPÄISCHE PATENTSCHRIFT

(11) **EP 3 571 555 B1**
(45) Veröffentlichungstag und Bekanntmachung des Hinweises auf die Patenterteilung: **20.01.2021**
(21) Anmeldenummer: 18707248.3
(22) Anmeldetag: 06.02.2018
(51) Int. Cl.: G05B 19/042

(54) **VERFAHREN ZUM BETRIEB EINES ENGINEERING-SYSTEMS FÜR EIN INDUSTRIELLES PROZESSAUTOMATISIERUNGSSYSTEM UND STEUERUNGSPROGRAMM**
METHOD FOR OPERATING AN ENGINEERING SYSTEM FOR AN INDUSTRIAL PROCESS AUTOMATION SYSTEM AND CONTROL PROGRAM
PROCÉDÉ DE FONCTIONNEMENT D'UN SYSTÈME D'INGÉNIERIE POUR UN SYSTÈME D'AUTOMATISATION DE PROCESSUS INDUSTRIEL ET PROGRAMME DE COMMANDE

(30) Priorität: 28.02.2017 EP 17158401
(43) Veröffentlichungstag der Anmeldung: 27.11.2019
(73) Patentinhaber: Siemens Aktiengesellschaft, 80333 München (DE)
(72) Erfinder: BEILSCHMIDT, Dirk, 53332 Bornheim (DE); WOJCIECHOWSKI, Alexander, 53177 Bonn (DE); ZHELYABOVSKAYA, Lyudmila, 53127 Bonn (DE)
(86) Internationale Anmeldenummer: PCT/EP2018/052893
(87) Internationale Veröffentlichungsnummer: WO 2018/158050

(56) Entgegenhaltungen:
- EP-A1- 2 221 694
- EP-A1- 3 051 369
- EP-A2- 1 906 274

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen im wesentlichen selbständigen Betrieb von Steuerungseinrichtungen, Sensoren, Maschinen und technischen Anlagen. Eine wesentliche Grundlage für eine zuverlässige Bereitstellung von Überwachungs-, Steuerungs- und Regelungsfunktionen mittels eines Prozessautomatisierungssystems besteht in einer vollständigen und korrekten Erfassung und Abbildung von Komponenten des industriellen Prozessautomatisierungssystems in einem Engineerung- bzw. Projektierungssystem.

Mittels eines Engineering-Systems können insbesondere Steuerungsprogramme für Automatisierungsgeräte projektiert werden, die zur Visualisierung eines Abbilds einer technischen Anlage oder einer komplexen Maschine und deren Steuerung bzw. Regelung vorgesehen sind. Zur Laufzeit der Steuerungsprogramme bzw. während eines Runtime-Betriebs wird ein technischer Prozess durch Automatisierungsgeräte, wie speicherprogrammierbare Steuerungen, gesteuert bzw. geregelt. Im Rahmen einer Prozessüberwachung während des Runtime-Betriebs kann eine Bedienperson Prozessbilder aufrufen, um einen Überblick über einen aktuellen Anlagenzustand zu erhalten sowie eine Prozessführung bzw. -bedienung wahrzunehmen.

In EP 1 166 215 B1 ist ein Verfahren zur automatischen Wiedergewinnung von Engineering-Daten aus technischen Anlagen beschrieben, bei dem Engineering- und Runtime-Objekte durch ein einheitliches Objektmodell beschrieben werden. Dadurch lässt sich eine direkte Entsprechung zwischen Engineering-Objekten und Runtime-Objekten auf Objektebene festlegen, so dass kein Informationsverlust durch eine Abbildung von Anlagenkomponenten auf das Objektmodell entsteht. Außerdem kann eine direkte Kommunikation zwischen Engineering- und Runtime-Objekten erfolgen.

Aus EP 2 808 749 B1 ist ein Verfahren zum Austausch von Steuerungsinformationen zwischen Bedien- und Beobachtungsgeräten eines industriellen Automatisierungssystems bekannt. Anhand der Steuerungsinformationen wird ein zumindest ausschnittweises Abbild einer mittels Automatisierungsgeräten geregelten oder gesteuerten technischen Anlage an einer graphischen Benutzerschnittstelle eines jeweiligen Bedien- und Beobachtungsgeräts visualisiert. Dem visualisierten Abbild sind Elemente der technischen Anlage repräsentierende computerbasierte Objekte zugeordnet, die durch eine auf einem jeweiligen Bedien- und Beobachtungsgerät eingerichtete Laufzeitumgebung bereitgestellt werden. Sämtliche an unterschiedlichen Bedien- und Beobachtungsgeräten bereitgestellten Objekttypen werden entsprechend einem einheitlichen Adressierungsschema für einen geräteübergreifenden Zugriff verfügbar gemacht.

US 6 063 128 betrifft ein System, das ein Speichergerät, eine erste und zweite Hardware- oder Software-Plattform, ein persistentes portables Datenmodell und computerbasierte Modellbildungssysteme umfasst, die von der ersten und zweiten Plattform abhängig sind. Jede Plattform weist eine Schnittstelle zum Speichergerät auf und stellt systemabhängige Dienste bereit. Der ersten Plattform sind ein erster Betriebssystem-Typ sowie ein erster Computer-Hardware-Typ zugeordnet, während der zweiten Plattform ein zweiter Betriebssystem-Typ sowie ein zweiter Computer-Hardware-Typ zugeordnet sind. Das portable Datenmodell ist im Speichergerät in einem plattformunabhängigen Format gespeichert und umfasst persistente Komponenten-Objekte. Darüber hinaus ist das computerbasierte Modellbildungssystem für die erste Plattform in einem ersten Speicherbereich des Speichergeräts gespeichert, während das computerbasierte Modellbildungssystem für die zweite Plattform in einem zweiten Speicherbereich des Speichergeräts gespeichert ist. Jedes computerbasierte Modellbildungssystem stellt Dienste bereit, um das portable Datenmodell aus dem Speichergerät abzurufen, das Datenmodell durch Hinzufügen und Entfernen von Komponenten-Objekten zu ändern und das Datenmodell persistent im Speichergerät zu speichern. Außerdem umfasst jedes computerbasierte Modellbildungssystem einen statischen Kernel und ein dynamisches Software-Framework. Die Kernel laufen auf der jeweiligen Plattform ab und bilden Schnittstellen zum zugeordneten Betriebssystem und zur entsprechenden Computer-Hardware. Die Software-Frameworks laufen auf der jeweiligen Plattform ab, bilden Schnittstellen zum zugeordneten Kernel und stellen jeweils eine plattformunabhängige graphische Benutzerschnittstelle bereit.

Mittels eines Engineering-Systems verwaltete Anlagendaten unterliegen während eines Lebenszyklus einer technischen Anlage ständigen Anpassungen und Änderungen, insbesondere im Rahmen von Wartungs- oder Modernisierungsarbeiten. Dabei greifen üblicherweise äußerst heterogene Benutzergruppen mittels unterschiedlicher stationärer oder mobiler Bediengeräte auf die Anlagendaten zu. Aus EP 1 906 274 A2, EP 3 051 369 A1 und EP 2 221 694 A1 sind jeweils Verfahren zum Zugriff auf Engineering- bzw. Konfigurationsdaten eines verteilten technischen Systems entsprechend dem Oberbegriff von Anspruch 1 bekannt.

Der vorliegenden Erfindung liegt die Aufgabe zugrunde, ein Verfahren zum Betrieb eines Engineering-Systems für ein industrielles Prozessautomatisierungssystem zu schaffen, das einen Zugriff auf Engineering-Daten mittels zahlreicher, unterschiedlicher Bediengeräte und eine Anpassung von Prozessabläufen für Such- bzw. Bearbeitungsanfragen im Produktivbetrieb ermöglicht, und ein Steuerungsprogramm zu dessen Implementierung anzugeben.

Diese Aufgabe wird erfindungsgemäß durch ein Verfahren mit den in Anspruch 1 angegebenen Merkmalen und durch ein Steuerungsprogramm mit den in Anspruch 10 angegebenen Merkmalen gelöst.

Entsprechend dem erfindungsgemäßen Verfahren zum Betrieb eines Engineering-Systems für ein industrielles Prozessautomatisierungssystem werden Komponenten des industriellen Prozessautomatisierungssystems jeweils durch ein computerbasiertes Objekt innerhalb des Engineering-Systems repräsentiert und in zumindest einer zumindest einem Server des Engineering-Systems zugeordneten Engineering-Datenbank persistent gespeichert. Die Objekte werden durch den Server innerhalb einer hierarchischen Objektstruktur verwaltet, wobei die Objektstruktur Abhängigkeiten zwischen Objekten umfasst. Funktionen des Engineering-Systems werden durch den Server als Dienste über eine einheitliche Dienstschnittstelle zur Nutzung durch Clients unterschiedlichen Typs verfügbar gemacht.

Die einheitliche Dienstschnittstelle wird erfindungsgemäß mittels eines dem Server zugeordneten Gateways gebildet, durch das die Dienste des Engineering-Systems Client-spezifisch verfügbar gemacht werden. Für Client-spezifische Dienstanforderungen wird zumindest ein jeweiliger Client-Typ identifiziert. Anhand dessen werden Client-spezifische Dienstanforderungen an einen Client-spezifischen Dienstzugangspunkt des Gateways weitergeleitet. Auf diese Weise können die Dienste des Engineering-Systems für eine Vielzahl unterschiedlicher Client-Gerätetypen verfügbar gemacht werden.

Erfindungsgemäß umfassen die in der Engineering-Datenbank gespeicherten Objekte operativ genutzte Produktivdaten einer technischen Anlage. Dagegen werden Prozessabläufe und -zustände zur Abfrage bzw. Bearbeitung von in der Engineering-Datenbank gespeicherten Objekten in einer von der Engineering-Datenbank separaten Auftragsdatenbank gespeichert werden. Die Prozessabläufe und -zustände werden durch Auftragsbearbeitungsobjekte innerhalb der Auftragsdatenbank repräsentiert und umfassen ereignisabhängige Zustandsübergänge bei einer Abfrage bzw. Bearbeitung von in der Engineering-Datenbank gespeicherten Objekten. Eine Abfrage bzw. Bearbeitung von in der Engineering-Datenbank gespeicherten Objekten erfolgt durch einen Auftragsbearbeitungsdienst mittels der in der Auftragsdatenbank gespeicherten Auftragsbearbeitungsobjekte erfolgt. Darüber hinaus erfolgt ein Zugriff auf in der Auftragsdatenbank gespeicherte Prozessabläufe und -zustände über eine von der einheitlichen Dienstschnittstelle separate Server-seitige Auftragsschnittstelle. Durch eine entkoppelte Bereitstellung der Dienste des Engineering-Systems und der Auftragsschnittstelle sowie eine Separierung von Engineering-Datenbank und Auftragsdatenbank lassen sich Prozessabläufe für Such- bzw. Bearbeitungsanfragen einfach und ohne unmittelbaren Zugriff auf produktiv genutzte Anlagendaten anpassen.

Entsprechend einer bevorzugten Ausgestaltung des erfindungsgemäßen Verfahrens geben die Dienste des Engineering-Systems und der Auftragsbearbeitungsdienst durch andere Dienste nutzbare Ereignismeldungen über eine einheitliche Ereignisschnittstelle aus. Die Ereignismeldungen sind durch die Dienste des Engineering-Systems bzw. den Auftragsbearbeitungsdienst zur ereignisabhängigen Steuerung auswählbar. Auf diese Weise können unabhängig voneinander bereitgestellte Dienste zuverlässig und effizient miteinander verknüpft werden.

Vorzugsweise wird die Auftragsschnittstelle mittels des dem Server zugeordneten Gateways Client-spezifisch verfügbar gemacht. Vorteilhafterweise wird für Client-spezifische Zugriffe auf die Auftragsschnittstelle zumindest ein jeweiliger Client-Typ identifiziert. Anhand dessen können Client-spezifische Zugriffe an einen Client-spezifischen Zugangspunkt des Gateways weitergeleitet werden. Auf diese Weise kann die Auftragsschnittstelle für eine Vielzahl unterschiedlicher Client-Gerätetypen verfügbar gemacht werden. Entsprechend einer weiteren vorteilhaften Ausgestaltung der vorliegenden Erfindung werden Clients mittels des Gateway für eine Nutzung der Dienste des Engineering-Systems und der Auftragsschnittstelle authentifiziert. Darüber hinaus kann das Engineering-System mehrere Server umfassen, an die Client-seitige Dienstanforderungen auslastungsabhängig zur Bearbeitung weitergeleitet werden. Somit ist eine einfache Skalierung des Engineering-Systems möglich.

Entsprechend einer weiteren vorteilhaften Ausgestaltung des erfindungsgemäßen Verfahrens werden durch eine Benutzerselektion vorgegebene Objekte für eine Bearbeitung aus der Engineering-Datenbank in zumindest einen Bearbeitungsspeicherbereich geladen. Dabei ist den Objekten und dem Bearbeitungsspeicherbereich jeweils ein zugriffsberechtigter Benutzer zugeordnet. Ein erster Bearbeitungsspeicherbereich, der als zugriffsberechtigter Benutzer einem zweiten Bearbeitungsspeicherbereich zugeordnet ist, ist hierarchisch vorrangig gegenüber dem zweiten Bearbeitungsspeicherbereich. Damit ist ein erstes Objekt in einem vorrangigen Bearbeitungsspeicherbereich, das einen identischen Objektidentifikator wie ein zweites Objekt in einem nachrangigen Bearbeitungsspeicherbereich aufweist, Vorgänger des zweiten Objekts ist.

Bei Einleitung einer Client-seitigen Benutzerfreigabe von in einen ausgewählten Bearbeitungsspeicherbereich geladenen freizugebenden Objekten wird vorteilhafterweise überprüft, ob dem ausgewählten Bearbeitungsspeicherbereich ein direkt vorrangiger Bearbeitungsspeicherbereich zugeordnet ist. Bei einem negativen Überprüfungsergebnis werden die in den ausgewählten Bearbeitungsspeicherbereich geladenen freizugebenden Objekte in die Engineering-Datenbank zurückgeschrieben. Andernfalls erfolgt ein Zurückschreiben in den direkt vorrangigen Bearbeitungsspeicherbereich. Auf diese Weise kann eine Vielzahl unterschiedlicher Benutzer Projektierungsarbeiten durchführen.

Vorzugsweise ist Bearbeitungsspeicherbereichen jeweils eine Ebeneninformation zugeordnet. Dabei unterscheidet sich die einem ausgewählten Bearbeitungsspeicherbereich zugeordnete Ebeneninformation von der einem direkt vorrangigen Bearbeitungsspeicherbereich zugeordneten Ebeneninformation um eine Stufe. Damit ist ein erstes Objekt in einem direkt vorrangigen Bearbeitungsspeicherbereich, das einen identischen Objektidentifikator wie ein zweites Objekt in einem nachrangigen Bearbeitungsspeicherbereich und einen übereinstimmenden zugriffsberechtigten Benutzer aufweist, direkter Vorgänger des zweiten Objekts.

Entsprechend einer besonders bevorzugten Ausführungsform der vorliegenden Erfindung werden in einen Bearbeitungsspeicherbereich geladene Objekte an einer Client-seitigen graphischen Benutzerschnittstelle gegenüber in der Datenbank gespeicherten Objekten überlagert dargestellt. In entsprechender Weise werden in einen nachrangigen Bearbeitungsspeicherbereich geladene Objekte an der Client-seitigen graphischen Benutzerschnittstelle gegenüber in einen vorrangigen Bearbeitungsspeicherbereich geladenen Objekten überlagert dargestellt. Auf diese Weise werden nur zur Bearbeitung tatsächlich benötigte Daten in den zumindest einen Benutzerspeicherbereich geladen, während sonstige produktiv genutzte Anlagendaten in der Engineering-Datenbank unverändert bleiben.

Das erfindungsgemäße Steuerungsprogramm zum Betrieb eines Engineering-Systems für ein industrielles Prozessautomatisierungssystem ist in einen Arbeitsspeicher eines Rechners ladbar und weist zumindest einen Codeabschnitt auf, bei dessen Ausführung vorangehend erläuterte Schritte durchgeführt werden, wenn das Steuerungsprogramm im Rechner abläuft.

Die vorliegende Erfindung wird nachfolgend an einem Ausführungsbeispiel anhand der Zeichnung näher erläutert. Es zeigt
- Figur 1: eine Anordnung mit mehreren Clients und einem Server eines Engineering-System für ein industrielles Prozessautomatisierungssystem,
- Figur 2: eine schematische Darstellung einer Überlagerung von Bearbeitungsspeicherbereichen an einer graphischen Benutzerschnittstelle eines Clients.

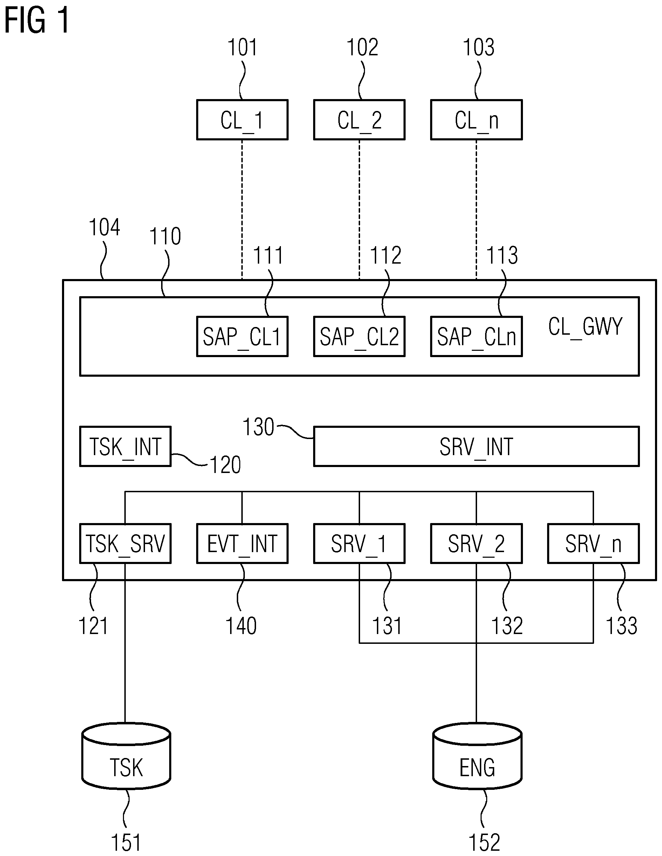

Die in Figur 1 dargestellte Anordnung umfasst einen Server 104 eines Engineering-Systems für ein industrielles Prozessautomatisierungssystem, bei dem Komponenten des industriellen Prozessautomatisierungssystems jeweils durch ein computerbasiertes Engineering-Objekt repräsentiert und in einer Serverseitigen Engineering-Datenbank 152 persistent gespeichert werden. Die Engineering-Objekte werden durch den Server 104 innerhalb einer hierarchischen Objektstruktur verwaltet. Dabei umfasst die Objektstruktur Abhängigkeiten zwischen den Engineering-Objekten. Funktionen des Engineering-Systems werden für eine Vielzahl von stationären oder mobilen Clients 101-103, die sich hinsichtlich Gerätetyp, Hardware-Plattform oder Software-Plattform stark unterscheiden können, als Dienste 131-133 über eine Server-seitige einheitliche Dienstschnittstelle 130 verfügbar gemacht. Auf in der Engineering-Datenbank 152 gespeicherte Engineering-Objekte gerichtete Client-seitige Such- bzw. Bearbeitungsanfragen werden an einen Auftragsbearbeitungsdienst 121 weitergeleitet.

Die in der Engineering-Datenbank 152 gespeicherten Objekte umfassen operativ genutzte Produktivdaten einer technischen Anlage. Prozessabläufe und -zustände zur Abfrage bzw. Bearbeitung von in der Engineering-Datenbank 152 gespeicherten Objekten werden demgegenüber in einer von der Engineering-Datenbank 152 separaten Auftragsdatenbank 151 gespeichert. Die Prozessabläufe und -zustände werden durch Auftragsbearbeitungsobjekte innerhalb der Auftragsdatenbank 152 repräsentiert und umfassen ereignisabhängige Zustandsübergänge bei einer Abfrage bzw. Bearbeitung von in der Engineering-Datenbank 152 gespeicherten Objekten. Eine Abfrage bzw. Bearbeitung von in der Engineering-Datenbank 152 gespeicherten Objekten erfolgt durch den Auftragsbearbeitungsdienst 121 mittels der in der Auftragsdatenbank 151 gespeicherten Auftragsbearbeitungsobjekte. Für einen Zugriff auf in der Auftragsdatenbank 151 gespeicherte Prozessabläufe und -zustände ist eine von der einheitlichen Dienstschnittstelle 130 separate Server-seitige Auftragsschnittstelle 120 vorgesehen. Die Dienste 131-133 des Engineering-Systems und der Auftragsbearbeitungsdienst 121 geben über eine einheitliche Ereignisschnittstelle 140 durch andere Dienste nutzbare Ereignismeldungen aus, die durch die Dienste 131-133 des Engineering-Systems bzw. durch den Auftragsbearbeitungsdienst 121 zur ereignisabhängigen Steuerung ausgewählt bzw. abonniert werden können.

Die einheitliche Dienstschnittstelle 130 wird mittels eines dem Server 104 zugeordneten Gateways 110 gebildet, durch das die Dienste 131-133 des Engineering-Systems Client-spezifisch verfügbar gemacht werden. Für Client-spezifische Dienstanforderungen wird ein jeweiliger Client-Typ identifiziert. Anhand dessen werden Client-spezifische Dienstanforderungen an einen Client-spezifischen Dienstzugangspunkt 111-113 des Gateways 110 weitergeleitet.

Auch die Auftragsschnittstelle 120 wird mittels des Serverseitigen Gateways 110 Client-spezifisch verfügbar gemacht. Hierzu identifiziert das Gateway 110 bei Client-seitigen Zugriffen auf die Auftragsschnittstelle 120 einen jeweiligen Client-Typ. Anhand dessen werden Client-spezifische Zugriffe an einen von mehreren Client-spezifischen Zugangspunkten 111-113 des Gateways 110 weitergeleitet. Darüber hinaus ist das Gateway 110 dafür vorgesehen, Clients 101-103 für eine Nutzung der Dienste 131-133 des Engineering-Systems und der Auftragsschnittstelle 120 zu authentifizieren. Grundsätzlich kann das Engineering-System mehrere Server umfassen, die prinzipiell wie der Server 104 ausgestaltet sind und an die Client-seitige Dienstanforderungen auslastungsabhängig zur Bearbeitung weitergeleitet werden.

Durch eine Erstellung von nachfolgend als Arbeitsschichten bezeichneten Bearbeitungsspeicherbereichen des Engineering-Systems können Engineering-Daten und Anlagenobjekte parallel von mehreren Benutzern bearbeitet werden. Bei einer Bearbeitung von Engineering-Objekten in Arbeitsschichten bleibt eine originäre Datenbasis einer technischen Anlage bis auf weiteres unverändert. Erst nach Bearbeitung werden vorgenommene Änderungen der Engineering-Objekte im Rahmen eines Freigabe-Prozesses mit der originären Datenbasis konsolidiert und in einen operativ genutzten Produktivdatenbestand der Anlage freigegeben.

Durch eine Benutzerselektion vorgegebene Engineering-Objekte werden für eine Bearbeitung aus der Engineering-Datenbank 152 lesend und schreibend in zumindest eine Arbeitsschicht geladen. Dabei ist den Engineering-Objekten und der Arbeitsschicht jeweils zumindest ein zugriffsberechtigter Benutzer bzw. Eigentümer zugeordnet. Zusätzlich zu den aus der Engineering-Datenbank 152 geladenen Engineering-Objekten sind in einer Arbeitsschicht neue Engineering-Objekte erzeugbar.

Arbeitsschichten können hierarchische Abhängigkeiten zu anderen Arbeitsschichten aufweisen. Eine erste Arbeitsschicht, die als Eigentümer einer zweiten Arbeitsschicht zugeordnet ist, ist dabei hierarchisch vorrangig gegenüber der zweiten Arbeitsschicht. Dementsprechend ist ein erstes Engineering-Objekt in einer vorrangigen Arbeitsschicht, das einen identischen Objektidentifikator wie ein zweites Engineering-Objekt in einer nachrangigen Arbeitsschicht aufweist, Vorgänger des zweiten Engineering-Objekts. Im vorliegenden Ausführungsbeispiel ist den Arbeitsschichten jeweils eine Ebeneninformation zugeordnet. Die einer ausgewählten Arbeitsschicht zugeordnete Ebeneninformation unterscheidet sich von der einer direkt vorrangigen Arbeitsschicht zugeordneten Ebeneninformation um genau eine Stufe. Ein erstes Engineering-Objekt in einer direkt vorrangigen Arbeitsschicht, das einen identischen Objektidentifikator wie ein zweites Engineering-Objekt in einer nachrangigen Arbeitsschicht und denselben Eigentümer aufweist, ist direkter Vorgänger des zweiten Engineering-Objekts.

Bei Client-seitiger Einleitung eines Freigabe-Prozesses von in eine ausgewählte Arbeitsschicht geladenen freizugebenden Engineering-Objekten wird überprüft, ob der ausgewählten Arbeitsschicht eine direkt vorrangige Arbeitsschicht zugeordnet ist. Bei einem negativen Überprüfungsergebnis werden die in die ausgewählte Arbeitsschicht geladenen freizugebenden Engineering-Objekte in die Engineering-Datenbank 152 zurückgeschrieben. Andernfalls werden die in die ausgewählte Arbeitsschicht geladenen freizugebenden Engineering-Objekte in die direkt vorrangige Arbeitsschicht zurückgeschrieben.

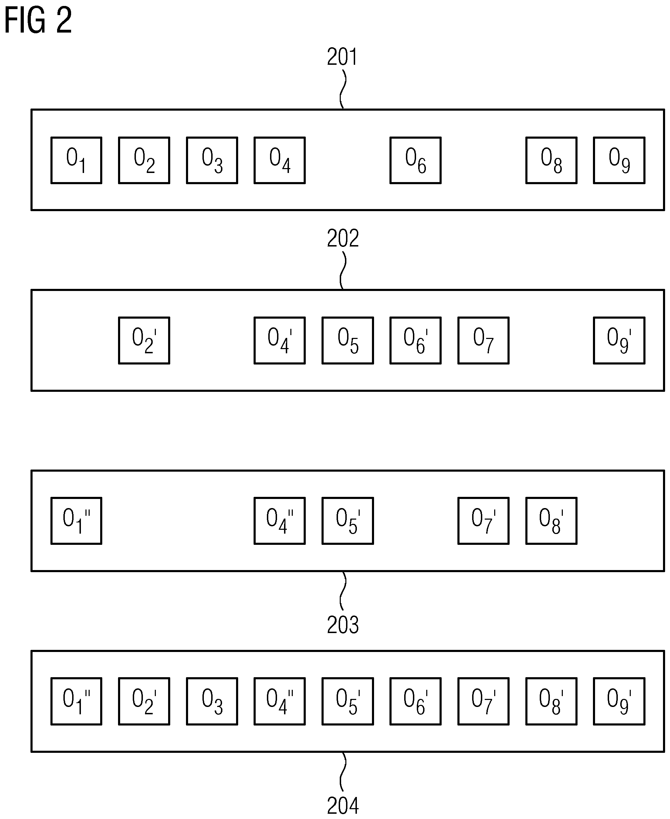

Entsprechend der in Figur 2 schematisch dargestellten Überlagerung von Arbeitsschichten 202, 203 an einer Client-seitigen graphischen Benutzerschnittstelle 204 werden in eine ausgewählte Arbeitsschicht 203 geladene Engineering-Objekte O₁", O₄", O₅', O₇', O₈' einerseits gegenüber dem in der Serverseitigen Datenbank gespeicherten Produktivdatenbestand O₁-O₄, O₆, O₈-O₉ überlagert dargestellt. Andererseits werden diese Engineering-Objekte O₁", O₄", O₅', O₇', O₈' gegenüber in eine vorrangige Arbeitsschicht 202 geladenen Engineering-Objekten O₂', O₄', O₅, O₆', O₇, O₉' überlagert dargestellt. An der graphischen Benutzerschnittstelle 204 sind entsprechend dem in Figur 2 dargestellten Beispiel resultierend die Engineering-Objekte O₁"_{,} O₂', O₃, O₄", O₅', O₆'_{,} O₇', O₈', O₉' sichtbar.

## Patentansprüche

1. Verfahren zum Betrieb eines Engineering-Systems für ein industrielles Prozessautomatisierungssystem, bei dem
- Komponenten des industriellen Prozessautomatisierungssystems jeweils durch ein computerbasiertes Objekt innerhalb des Engineering-Systems repräsentiert und in zumindest einer zumindest einem Server (104) des Engineering-Systems zugeordneten Engineering-Datenbank (152) persistent gespeichert werden,
- die Objekte durch den Server innerhalb einer hierarchischen Objektstruktur verwaltet werden, wobei die Objektstruktur Abhängigkeiten zwischen Objekten umfasst,
- Funktionen des Engineering-Systems als Dienste (131-133) durch den Server über eine einheitliche Dienstschnittstelle (130) zur Nutzung durch Clients unterschiedlichen Typs verfügbar gemacht werden,
- die einheitliche Dienstschnittstelle (130) mittels eines dem Server (104) zugeordneten Gateways (110) gebildet wird, durch das die Dienste (131-133) des Engineering-Systems Client-spezifisch verfügbar gemacht werden,
- für Client-spezifische Dienstanforderungen zumindest ein jeweiliger Client-Typ identifiziert wird und Client-spezifische Dienstanforderungen anhand dessen an einen Client-spezifischen Dienstzugangspunkt (111-113) des Gateways (110) weitergeleitet werden,
**dadurch gekennzeichnet, dass**
- die in der Engineering-Datenbank (152) gespeicherten Objekte operativ genutzte Produktivdaten einer technischen Anlage umfassen,
- Prozessabläufe und -zustände zur Abfrage und/oder Bearbeitung von in der Engineering-Datenbank (152) gespeicherten Objekten in einer von der Engineering-Datenbank (152) separaten Auftragsdatenbank (151) gespeichert werden, wobei die Prozessabläufe und -zustände durch Auftragsbearbeitungsobjekte innerhalb der Auftragsdatenbank (152) repräsentiert werden und ereignisabhängige Zustandsübergänge bei einer Abfrage und/oder Bearbeitung von in der Engineering-Datenbank (152) gespeicherten Objekten umfassen,
- eine Abfrage und/oder Bearbeitung von in der Engineering-Datenbank (152) gespeicherten Objekten durch einen Auftragsbearbeitungsdienst (121) mittels der in der Auftragsdatenbank (151) gespeicherten Auftragsbearbeitungsobjekte erfolgt,
- ein Zugriff auf in der Auftragsdatenbank (151) gespeicherte Prozessabläufe und -zustände über eine von der einheitlichen Dienstschnittstelle (130) separate Server-seitige Auftragsschnittstelle (120) erfolgt.

2. Verfahren nach Anspruch 1,
bei dem die Dienste (131-133) des Engineering-Systems und der Auftragsbearbeitungsdienst (121) über eine einheitliche Ereignisschnittstelle (140) durch andere Dienste nutzbare Ereignismeldungen ausgeben, die durch die Dienste (131-133) des Engineering-Systems und/oder den Auftragsbearbeitungsdienst (121) zur ereignisabhängigen Steuerung auswählbar sind.

3. Verfahren nach einem der Ansprüche 1 oder 2,
bei dem die Auftragsschnittstelle (120) mittels des dem Server zugeordneten Gateways (110) Client-spezifisch verfügbar gemacht wird.

4. Verfahren nach Anspruch 3,
bei dem für Client-spezifische Zugriffe auf die Auftragsschnittstelle (120) zumindest ein jeweiliger Client-Typ identifiziert wird und Client-spezifische Zugriffe anhand dessen an einen Client-spezifischen Zugangspunkt des Gateways (110) weitergeleitet werden.

5. Verfahren nach einem der Ansprüche 3 oder 4,
bei dem Clients (101-103) mittels des Gateways (110) für eine Nutzung der Dienste (131-133) des Engineering-Systems und der Auftragsschnittstelle (120) authentifiziert werden.

6. Verfahren nach einem der Ansprüche 1 bis 5,
bei dem das Engineering-System mehrere Server umfasst, an die Client-seitige Dienstanforderungen auslastungsabhängig zur Bearbeitung weitergeleitet werden.

7. Verfahren nach einem der Ansprüche 1 bis 6,
bei dem durch eine Benutzerselektion vorgegebene Objekte für eine Bearbeitung aus der Engineering-Datenbank (201) in zumindest einen Bearbeitungsspeicherbereich (202, 203) geladen werden, wobei den Objekten und dem Bearbeitungsspeicherbereich jeweils ein zugriffsberechtigter Benutzer zugeordnet ist, bei dem ein erster Bearbeitungsspeicherbereich (202), der als zugriffsberechtigter Benutzer einem zweiten Bearbeitungsspeicherbereich (203) zugeordnet ist, hierarchisch vorrangig gegenüber dem zweiten Bearbeitungsspeicherbereich (203) ist, bei dem ein erstes Objekt (O₄', O₅, O₇) in einem vorrangigen Bearbeitungsspeicherbereich (202), das einen identischen Objektidentifikator wie ein zweites Objekt (O₄", O₅', O₇') in einem nachrangigen Bearbeitungsspeicherbereich (203) aufweist, Vorgänger des zweiten Objekts ist, bei Einleitung einer Client-seitigen Benutzerfreigabe von in einen ausgewählten Bearbeitungsspeicherbereich (203) geladenen freizugebenden Objekten überprüft wird, ob dem ausgewählten Bearbeitungsspeicherbereich (203) ein direkt vorrangiger Bearbeitungsspeicherbereich (202) zugeordnet ist, bei dem die in den ausgewählten Bearbeitungsspeicherbereich geladenen freizugebenden Objekte bei einem negativen Überprüfungsergebnis in die Engineering-Datenbank (201) zurückgeschrieben werden und bei dem die in den ausgewählten Bearbeitungsspeicherbereich geladenen freizugebenden Objekte bei einem positiven Überprüfungsergebnis in den direkt vorrangigen Bearbeitungsspeicherbereich zurückgeschrieben werden.

8. Verfahren nach Anspruch 7,
bei dem Bearbeitungsspeicherbereichen jeweils eine Ebeneninformation zugeordnet ist, bei dem sich die einem ausgewählten Bearbeitungsspeicherbereich zugeordnete Ebeneninformation von der einem direkt vorrangigen Bearbeitungsspeicherbereich zugeordneten Ebeneninformation um eine Stufe unterscheidet und bei dem ein erstes Objekt in einem direkt vorrangigen Bearbeitungsspeicherbereich, das einen identischen Objektidentifikator wie ein zweites Objekt in einem nachrangigen Bearbeitungsspeicherbereich und einen übereinstimmenden zugriffsberechtigten Benutzer aufweist, direkter Vorgänger des zweiten Objekts ist.

9. Verfahren nach einem der Ansprüche 7 oder 8,
bei dem in einen Bearbeitungsspeicherbereich geladene Objekte an einer Client-seitigen graphischen Benutzerschnittstelle gegenüber in der Datenbank gespeicherten Objekten überlagert dargestellt werden und bei dem in einen nachrangigen Bearbeitungsspeicherbereich geladene Objekte an der Client-seitigen graphischen Benutzerschnittstelle gegenüber in einen vorrangigen Bearbeitungsspeicherbereich geladenen Objekten überlagert dargestellt werden.

10. Steuerungsprogramm zum Betrieb eines Engineering-Systems für ein industrielles Prozessautomatisierungssystem, wobei das Steuerungsprogramm in einen Arbeitsspeicher eines Rechners ladbar ist und zumindest einen Codeabschnitt aufweist, bei dessen Ausführung
- Komponenten des industriellen Prozessautomatisierungssystems jeweils durch ein computerbasiertes Objekt innerhalb des Engineering-Systems repräsentiert und in zumindest einer zumindest einem Server (104) des Engineering-Systems zugeordneten Engineering-Datenbank (152) persistent gespeichert werden,
- die Objekte durch den Server innerhalb einer hierarchischen Objektstruktur verwaltet werden, wobei die Objektstruktur Abhängigkeiten zwischen Objekten umfasst,
- Funktionen des Engineering-Systems als Dienste (131-133) durch den Server über eine einheitliche Dienstschnittstelle (130) zur Nutzung durch Clients unterschiedlichen Typs verfügbar gemacht werden,
- die einheitliche Dienstschnittstelle (130) mittels eines dem Server (104) zugeordneten Gateways (110) gebildet wird, durch das die Dienste (131-133) des Engineering-Systems Client-spezifisch verfügbar gemacht werden,
- für Client-spezifische Dienstanforderungen zumindest ein jeweiliger Client-Typ identifiziert wird und Client-spezifische Dienstanforderungen anhand dessen an einen Client-spezifischen Dienstzugangspunkt (111-113) des Gateway (110) weitergeleitet werden,
- die in der Engineering-Datenbank (152) gespeicherten Objekte operativ genutzte Produktivdaten einer technischen Anlage umfassen,
- Prozessabläufe und -zustände zur Abfrage und/oder Bearbeitung von in der Engineering-Datenbank (152) gespeicherten Objekten in einer von der Engineering-Datenbank (152) separaten Auftragsdatenbank (151) gespeichert werden, wobei die Prozessabläufe und -zustände durch Auftragsbearbeitungsobjekte innerhalb der Auftragsdatenbank (152) repräsentiert werden und ereignisabhängige Zustandsübergänge bei einer Abfrage und/oder Bearbeitung von in der Engineering-Datenbank (152) gespeicherten Objekten umfassen,
- eine Abfrage und/oder Bearbeitung von in der Engineering-Datenbank (152) gespeicherten Objekten durch einen Auftragsbearbeitungsdienst (121) mittels der in der Auftragsdatenbank (151) gespeicherten Auftragsbearbeitungsobjekte erfolgt,
- ein Zugriff auf in der Auftragsdatenbank (151) gespeicherte Prozessabläufe und -zustände über eine von der einheitlichen Dienstschnittstelle (130) separate Server-seitige Auftragsschnittstelle (120) erfolgt,
wenn das Steuerungsprogramm im Rechner abläuft.

## Claims

1. Method for operating an engineering system for an industrial process automation system, in which
- components of the industrial process automation system are each represented by a computer-based object within the engineering system and are persistently stored in at least one engineering database (152) associated with at least one server (104) of the engineering system,
- the objects are managed by the server within a hierarchical object structure, the object structure comprising dependencies between objects,
- functions of the engineering system are made available by the server via a standard service interface (130) as services (131-133) for use by clients of different types,
- the standard service interface (130) is formed by means of a gateway (110), which is assigned to the server (104) and by means of which the services (131-133) of the engineering system are made available on a client-specific basis,
- for client-specific service requests at least one respective client type is identified, and on the basis thereof client-specific service requests are forwarded to a client-specific service access point (111-113) of the gateway (110), **characterized in that**
- the objects stored in the engineering database (152) comprise operationally used productive data of a technical system,
- process sequences and states for querying and/or processing objects stored in the engineering database (152) are stored in an order database (151) separate from the engineering database (152), wherein the process sequences and states are represented by order processing objects within the order database (152) and comprise event-driven state transitions in the event of a query and/or processing of objects stored in the engineering database (152),
- objects stored in the engineering database (152) are queried and/or processed by an order processing service (121) by means of the order processing objects stored in the order database (151),
- access to process sequences and states stored in the order database (151) takes place via a server-side order interface (120) separate from the standard service interface (130) .

2. Method according to Claim 1,
in which the services (131-133) of the engineering system and of the order processing service (121) output event messages usable by other services via a standard event interface (140), and which can be selected by the services (131-133) of the engineering system and/or the order processing service (121) to provide event-driven control.

3. Method according to any one of Claims 1 or 2,
in which the order interface (120) is made available on a client-specific basis by means of the gateway (110) associated with the server.

4. Method according to Claim 3,
in which for client-specific accesses to the order interface (120) at least one respective client type is identified and on the basis thereof, client-specific accesses are forwarded to a client-specific access point of the gateway (110).

5. Method according to any one of Claims 3 or 4,
in which clients (101-103) are authenticated by means of the gateway (110) for use of the services (131-133) of the engineering system and the order interface (120).

6. Method according to any one of Claims 1 to 5,
in which the engineering system comprises a plurality of servers, to which client-side service requests are forwarded for processing depending on usage.

7. Method according to any one of Claims 1 to 6,
in which objects specified for processing by a user selection are loaded from the engineering database (201) into at least one processing memory area (202, 203), wherein the objects and the processing memory area are assigned one access-authorized user in each case, in which a first processing memory area (202), which is assigned as an access-authorized user to a second processing memory area (203), is hierarchically superior to the second processing memory area (203), in which a first object (O₄', O₅, O₇) in a higher-ranked processing memory area (202) which has an identical object identifier to a second object (O₄", O₅" O₇') in a lower-ranked processing memory area (203) is the predecessor of the second object, if the client-side initiates a user release of objects loaded into a selected processing memory area (203) to be released, a test is performed to determine whether the selected processing memory area (203) is assigned an immediately higher-ranked processing memory area (202), in which in the event of a negative test result the objects loaded into the selected processing memory area to be released are written back into the engineering database (201), and in which in the event of a positive test result the objects loaded into the selected processing memory area to be released are written back into the immediately higher-ranked processing memory area.

8. Method according to Claim 7,
in which processing memory areas are each assigned one level information item, in which the level information assigned to a selected processing memory area differs from the level information assigned to an immediately higher-ranked processing memory area by one step, and in which a first object in an immediately higher-ranked processing memory area, which has an identical object identifier to a second object in a subordinate processing memory area and a matching access authorized user, is the direct predecessor of the second object.

9. Method according to any of Claims 7 or 8,
in which objects loaded into a processing memory area are displayed on a client-side graphical user interface as superimposed on objects stored in the database, and in which objects loaded into a lower-ranked processing memory area are displayed on the client-side graphical user interface as being superimposed on objects loaded into a higher-ranked processing memory area.

10. Control program for operating an engineering system for an industrial process automation system, wherein the control program can be loaded into a working memory of a computer and has at least one section of code, during the execution of which
- components of the industrial process automation system are each represented by a computer-based object within the engineering system and are persistently stored in at least one engineering database (152) associated with at least one server (104) of the engineering system,
- the objects are managed by the server within a hierarchical object structure, the object structure comprising dependencies between objects,
- functions of the engineering system are made available by the server via a standard service interface (130) as services (131-133) for use by clients of different types,
- the standard service interface (130) is formed by means of a gateway (110), which is assigned to the server (104) and by means of which the services (131-133) of the engineering system are made available on a client-specific basis,
- for client-specific service requests at least one respective client type is identified, and on the basis thereof client-specific service requests are forwarded to a client-specific service access point (111-113) of the gateway (110),
- the objects stored in the engineering database (152) comprise operationally used productive data of a technical system,
- process sequences and states for querying and/or processing objects stored in the engineering database (152) are stored in an order database (151) separate from the engineering database (152), wherein the process sequences and states are represented by order processing objects within the order database (152) and comprise event-driven state transitions in the event of a query and/or processing of objects stored in the engineering database (152),
- objects stored in the engineering database (152) are queried and/or processed by an order processing service (121) by means of the order processing objects stored in the order database (151),
- access to process sequences and states stored in the order database (151) takes place via a server-side order interface (120) separate from the standard service interface (130),
when the control program is running on the computer.

## Revendications

1. Procédé pour faire fonctionner un système d'ingénierie d'un système industriel d'automatisation de processus, dans lequel
- on représente des composants du système industriel d'automatisation de processus, chacun par un objet informatique dans le système d'ingénierie et on les met en mémoire de manière persistante dans au moins une base (152) de données d'ingénierie associée à au moins un serveur (104) du système d'ingénierie,
- on gère les objets par le serveur dans une structure d'objet hiérarchique, la structure d'objet comprenant des relations entre des objets,
- on rend disponible, à l'utilisation par des clients de types différents, des fonctions du système d'ingénierie comme services (131 à 133) par le serveur par une interface (130) unitaire de service,
- on forme l'interface (130) unitaire de service au moyen d'une gateway (110), qui est associée au serveur (104) et par laquelle les services (131 à 133) du système d'ingénierie sont rendus disponibles d'une manière spécifique au client,
- pour des requêtes de service spécifiques au client, on identifie un type de client à l'aide duquel on achemine des requêtes de service spécifiques au client à un point (111 à 113) d'accès de service spécifique au client de la gateway (110),
**caractérisé en ce que**
- les objets mis en mémoire dans la base (152) de données d'ingénierie comprennent des données productives utilisées en opération d'une installation technique,
- on met en mémoire, dans une base (151) de données d'ordre distincte de la base (152) de données d'ingénierie, des déroulements et des états de processus mis en mémoire pour l'interrogation et/ou le traitement d'objets mis en mémoire dans la base (152) de données d'ingénierie, dans lequel les déroulements et les états de processus sont représentés dans la base (152) de données d'ordre par des objets de traitement d'ordre et comprennent des transitions d'état, qui dépendent d'un événement, lors d'une interrogation et/ou d'un traitement d'objet mis en mémoire dans la base (152) de données d'ingénierie,
- une interrogation et/un traitement d'objets mis en mémoire dans la base (152) de données d'ingénierie s'effectue par un service (121) de traitement d'ordre, au moyen des objets de traitement d'ordre mis en mémoire dans la base (151) de données d'ordre,
- un accès aux déroulements et aux états de processus mis en mémoire dans la base (151) de données d'ordre a lieu par une interface (120) d'ordre, du côté du serveur, distincte de l'interface (130) unitaire de service.

2. Procédé suivant la revendication 1,
dans lequel les services (131 à 133) du système d'ingénierie et le service (121) de traitement d'ordre émettent, par une interface (140) unitaire d'événement, des messages d'événement, qui peuvent être utilisés par d'autres services et qui sont sélectionnés pour la commande, qui dépend d'un événement, par les services (131 à 133) du système d'ingénierie et/ou par le service (121) de traitement d'ordre.

3. Procédé suivant l'une des revendications 1 ou 2,
dans lequel on rend l'interface (120) d'ordre disponible d'une manière spécifique au client, au moyen de la gateway (110) associée au serveur.

4. Procédé suivant la revendication 3,
dans lequel, pour des accès spécifiques au client à l'interface (120) d'ordre, on identifie au moins un type respectif de client et, à l'aide de celui-ci, on achemine des accès spécifiques au client à un point d'entrée spécifique au client de la gateway (110).

5. Procédé suivant l'une des revendications 3 ou 4,
dans lequel on authentifie des clients (101 à 103) au moyen de la gateway (110) pour une utilisation des services (131, 133) du système d'ingénierie et de l'interface (120) d'ordre.

6. Procédé suivant l'une des revendications 1 à 5,
dans lequel le système d'ingénierie comprend plusieurs serveurs où l'on achemine les demandes de service de la part du client pour le traitement en fonction de l'utilisation.

7. Procédé suivant l'une des revendications 1 à 6,
dans lequel on charge, dans au moins une partie (202, 203) de mémoire de traitement, des objets donnés à l'avance par une sélection d'utilisateurs pour un traitement dans la base (201) de données d'ingénierie, dans lequel, aux objets et à la partie de mémoire de traitement, est associé, respectivement, un utilisateur autorisé d'accès, dans lequel une première partie (202) de mémoire de traitement, qui est associée comme utilisateur autorisé d'accès, est associée à une deuxième partie (203) de mémoire de traitement, prioritaire hiérarchiquement par rapport à la deuxième partie
(203) de mémoire de traitement, dans lequel un premier objet (O₄', O₅, O₇) est, dans une partie (202) prioritaire de la mémoire de traitement précédente, qui a un identifiant d'objet identique à celui d'un deuxième objet (O₄", O₅', O₇') dans une partie (203) de mémoire de traitement venant ensuite en priorité, un précurseur du deuxième objet, on contrôle, au déclenchement d'une validation d'utilisateur de la part du client d'objet à valider chargée dans une partie (203) sélectionnée de la mémoire de traitement, s'il est associée, à la partie (203) sélectionnée de la mémoire de traitement, une partie (202) directement prioritaire de la mémoire de traitement, dans lequel on écrit en retour, dans la base (201) de données d'ingénierie, si le résultat du contrôle est négatif, des objets à valider chargés dans la partie sélectionnée de la mémoire de traitement, et dans lequel on écrit en retour, dans la partie directement prioritaire de la mémoire de traitement, si le résultat du contrôle est positif, les objets à valider chargés dans la partie sélectionnée de la mémoire de traitement.

8. Procédé suivant la revendication 7,
dans lequel, aux parties de mémoire de traitement est associée, respectivement, une information de plan, dans lequel l'information de plan, associée à la partie sélectionnée de mémoire de traitement, se distingue d'un palier de l'information de plan associée à la partie directement prioritaire de la mémoire de traitement, et dans lequel un premier objet, dans une partie directement prioritaire de la mémoire de traitement, qui a un identifiant d'objet, identique à un deuxième objet dans une partie suivante en priorité de la mémoire de traitement, et un utilisateur autorisé d'accès, qui coïncide, est un précurseur direct du deuxième objet.

9. Procédé suivant l'une des revendications 7 ou 8,
dans lequel on représente, de manière superposée, par rapport à des objets mis en mémoire dans la base de données, des objets chargés dans une partie de la mémoire de traitement sur une interface d'utilisateur graphique du côté du client, et dans lequel on représente, de manière superposée par rapport à des objets chargés dans une partie prioritaire de la mémoire de traitement, des objets chargés dans une partie venant ensuite en priorité de la mémoire de traitement sur l'interface d'utilisateur graphique du côté du client.

10. Programme de commande pour faire fonctionner un système d'ingénierie pour un système industriel d'automatisation de processus, dans lequel le programme de commande peut être chargé dans une partie de mémoire d'un ordinateur et a au moins une partie de code dans la réalisation duquel
- on représente des composants du système industriel d'automatisation de processus, chacun par un objet informatique dans le système d'ingénierie et on les met en mémoire de manière persistante dans au moins une base (152) de données d'ingénierie associée à au moins un serveur (104) du système d'ingénierie,
- on gère les objets par le serveur dans une structure d'objet hiérarchique, la structure d'objet comprenant des relations entre des objets,
- on rend disponible, à l'utilisation par des clients de types différents, des fonctions du système d'ingénierie comme services (131 à 133) par le serveur par une interface (130) unitaire de service,
- on forme l'interface (130) unitaire de service au moyen d'une gateway (110), qui est associée au serveur (104) et par laquelle les services (131 à 133) du système d'ingénierie sont rendus disponibles d'une manière spécifique au client,
- pour des requêtes de service spécifiques au client à l'aide duquel on achemine des requêtes de service spécifiques au client à un point (111 à 113) d'accès de service spécifique au client de la gateway (110),
- les objets mis en mémoire dans la base (152) de données d'ingénierie comprennent des données productives utilisées en opération d'une installation technique,
- on met en mémoire, dans une base (151) de données d'ordre distincte de la base (152) de données d'ingénierie, des déroulements et des états de processus mis en mémoire pour l'interrogation et/ou le traitement d'objets mis en mémoire dans la base (152) de données d'ingénierie, dans lequel les déroulements et les états de processus sont représentés dans la base (152) de données d'ordre par des objets de traitement d'ordre et comprennent des transitions d'état, qui dépendent d'un événement, lors d'une interrogation et/ou d'un traitement d'objets mis en mémoire dans la base (152) de données d'ingénierie,
- une interrogation et/un traitement d'objet mis en mémoire dans la base (152) de données d'ingénierie s'effectue par un service (121) de traitement d'ordre, au moyen des objets de traitement d'ordre mis en mémoire dans la base (151) de données d'ordre,
- un accès aux déroulements et aux états de processus mis en mémoire dans la base (151) de données d'ordre a lieu par une interface (120) d'ordre, du côté du serveur, distincte de l'interface (130) unitaire de service,
lorsque le programme de commande se déroule dans l'ordinateur.
